# EUROPÄISCHE PATENTANMELDUNG

(11) **EP 4 136 969 A1**
(43) Veröffentlichungstag der Anmeldung: **22.02.2023**
(21) Anmeldenummer: 22191222.3
(22) Anmeldetag: 19.08.2022
(51) Int. Cl.: A01M 21/02, A01M 21/04, A01M 7/00

(54) **VORRICHTUNG UND VERFAHREN ZUR PFLANZENREGULIERUNG IN EINEM KULTURPFLANZENBESTAND**

(30) Priorität: 19.08.2021 DE 102021121637
(71) Anmelder: Wolf, Jan, 34130 Kassel (DE)
(72) Erfinder: Wolf, Jan, 34130 Kassel (DE)
(74) Vertreter: Sprenger, Gerrit Lars Eike

(57) **Zusammenfassung**

Die Erfindung betrifft eine Vorrichtung zur Pflanzenregulierung in einem Kulturpflanzenbestand, die über diesen Kulturpflanzenbestand bewegbar ist, mit
a) wenigstens einem Flüssigkeitsspeicher (S) zur Aufnahme von Flüssigkeit,
b) wenigstens einem mit dem wenigstens einen Flüssigkeitsspeicher (S) verbundenen ersten Leitungssystem (1) für Flüssigkeit, welches mit wenigstens einem über ein Ventil (3) ansteuerbaren Flüssigkeitsauslass (5) versehen ist,
c) einer Erkennungseinrichtung (12) zur Erkennung von Pflanzen und Übermittlung der Positionsdaten der Pflanzen an die Steuereinrichtung,
d) einer Steuereinrichtung (13) zur Ansteuerung des wenigstens einen Ventils (3) des Leitungssystems (1) für Flüssigkeit,
wobei die Erkennungseinrichtung zur Differenzierung von Pflanzen im Kulturpflanzenbestand zwischen gewollten Pflanzen und ungewollten Pflanzen ausgebildet ist und die Steuereinrichtung zum Öffnen der Ventile des wenigstens einen ersten Leitungssystems ausschließlich zum Besprühen der ungewollten Pflanzen im Kulturpflanzenbestand mit Flüssigkeit ausgebildet ist bzw. zum Aussparen der gewollten Pflanzen.

Die Erfindung zeichnet sich dadurch aus, dass ungewollte Pflanzen durch die Wirkung der kinetischen und/oder thermischen Energie der Flüssigkeit geschädigt oder abgetötet werden, wobei die Schädigung durch die Wirkung der kinetischen Energie vorzugsweise durch Spülen bzw. Mitreißen der Pflanze in den Boden erfolgt und die thermische Schädigung durch heiße Flüssigkeit und/oder Flüssigkeitsdampf mit einer Temperatur von über 333 K erfolgt.

## Beschreibung

Die Erfindung betrifft eine Vorrichtung zur Pflanzenregulierung in einem Kulturpflanzenbestand nach dem Oberbegriff des Patentanspruchs 1 sowie ein Verfahren nach dem Oberbegriff des Patentanspruchs 14.

Im ökologischen landwirtschaftlichen Anbau von Kulturpflanzen wird Beikraut wo immer möglich durch mechanische, thermische und biologische Verfahren, wie beispielsweise Hacken, Striegeln, Abflammen und Beachtung der Fruchtfolge reguliert. In bestimmten Fällen kommen kameragesteuerte Hacken zum Einsatz, die auch innerhalb der Kulturpflanzenreihe arbeiten, ihr Einsatz ist aber auf gepflanzte Kulturen begrenzt. Insbesondere in dicht gesäten, vergleichsweise langsam wachsenden Kulturen wie Möhren, Zwiebeln und anderen Hackfrüchten bleibt ein beachtlicher Anteil, der heute noch durch kostenintensive Handarbeit reguliert wird. Daher bedeutet der Verzicht auf Pestizide und die dadurch notwendige nichtchemische, mechanische, thermische und vor allem die manuelle Beikrautregulierung eine signifikante finanzielle Mehrbelastung ökologisch wirtschaftender landwirtschaftlicher Betriebe. Im konventionellen Anbau steigt der Bedarf nach nichtchemischer Beikrautregulierung durch die sinkende Zahl zugelassener Herbizide und ihre geringer werdende gesellschaftliche Akzeptanz.

Das Prinzip, Pflanzen mittels Heißwasser abzutöten, ist seit langem bekannt und wird vor allem im Bereich der Kommunaltechnik angewendet. Varianten davon bilden die Beikrautregulierung mittels Heißschaum sowie mittels gesättigten Wasserdampfs. Die Systeme sind vor allem zur Beikrautregulierung auf befestigten Flächen (auf Gehwegen, an Straßenrändern, gepflasterten oder geschotterten Flächen) geeignet. Kleinere Systeme arbeiten mit einer Basisstation, die das Heißwasser erzeugt und einer handgeführten Lanze/Verteiler zur Heißwasserausbringung. Bei größeren Systemen ist das gesamte System auf ein kleines Geräteträger-Fahrzeug aufgebaut und wird damit über die Fläche bewegt. Nach unten gerichtete Auslassöffnungen verteilen dabei das heiße Wasser auf der Fläche und den Pflanzen.

Die Firmen Heatweed und Waterkracht haben Maschinen im Angebot, welche mittels Kamera und einer einfachen Grünerkennung Vegetation von unbewachsenen Bereichen unterscheiden. Auf Basis dieser Pflanzenerkennung werden elektrisch schaltbare Ventile angesteuert, sodass nur in bewachsenen Bereichen Heißwasser ausgebracht wird. Dadurch wird die benötigte Wasser- und Energiemenge im Vergleich zu einer vollflächigen Heißwasseranwendung reduziert.

Aus der EP 3 329 773 A1 und EP 1 588 615 B1 sind Vorrichtungen und Verfahren zur Unkrautregulation mit Heißwasser bereits bekannt, auch in Kombination mit einer Pflanzenerkennung, die heißes Wasser nur auf bewachsenen Flächen ausbringt. Insbesondere ist aus der EP 3 329 773 A1 eine Vorrichtung nach dem Oberbegriff des Patentanspruchs 1 und ein Verfahren nach dem Oberbegriff des Patentanspruchs 14 bekannt. Dabei findet ein Besprühen der erkannten Pflanzen mit heißem Wasser statt, wobei das heiße Wasser in einem Flüssigkeitsspeicher bevorratet ist. Über ein mit dem Flüssigkeitsspeicher verbundenes Leitungssystem, welches mit einer Mehrzahl von Ventilen mit ansteuerbarem Flüssigkeitsauslass versehen ist, findet nach einer Erkennung von Pflanzen mittels einer Erkennungseinrichtung und Übermittlung der Positionsdaten der Pflanzen an die Steuereinrichtung, durch die Steuereinrichtung ein Öffnen derjenigen Ventile des Leitungssystems statt, die über einer Pflanze angeordnet sind. Hierdurch wird diese Pflanze mit heißem Wasser besprüht, dass diese derart schädigt, dass sie abstirbt. Durch diese Maßnahme ist es nicht notwendig, die gesamte Fläche mit heißem Wasser zu beaufschlagen, sondern nur die mit Pflanzen bewachsenen Bereiche, sodass dadurch eine Optimierung des Einsatzes von heißem Wasser ermöglicht ist. Allerdings lässt sich in einem Kulturpflanzenbestand ein derartiges Verfahren mit einer solchen Vorrichtung nicht anwenden, da die Erkennungseinrichtung nicht zwischen gewollten und nicht gewollten Pflanzen unterscheidet und daher auch die gewollten Kulturpflanzen geschädigt beziehungsweise zerstört würden.

Aus der DE 10 2015 119 026 A1 ist ferner eine Vorrichtung nach dem Oberbegriff des Patentanspruchs 1 bekannt. Bei dieser Vorrichtung wird durch punktgenaues Ausbringen von Herbiziden deren Menge bei der Anwendung reduziert. Es wird zwar auch eine thermische Behandlung mittels Flammen, Strahlung, Dampf und Heißwasser beschrieben. Allerdings besteht dabei der Nachteil, dass bei einer thermischen Behandlung von nicht gewünschten Pflanzen im Kulturpflanzenbestand eine thermische Beschädigung der Kulturpflanzen selbst nicht auszuschließen ist. Die heiße Flüssigkeit kann sich nach der Ausbringung auf ungewollte Pflanzen unkontrolliert verteilen und so auch benachbarte Kulturpflanzen erreichen und schädigen.

Es ist daher Aufgabe der Erfindung, eine Vorrichtung mit allen Merkmalen des Oberbegriffs des Patentanspruchs 1 beziehungsweise ein Verfahren mit allen Merkmalen des Oberbegriffs des Patentanspruchs 14 derart zu verbessern, dass die Unkrautregulation auch im Kulturpflanzenbestand anwendbar ist und eine Schädigung der Kulturpflanzen minimiert ist.

Gelöst wird diese Aufgabe durch eine Vorrichtung mit allen Merkmalen des Patentanspruchs 1 beziehungsweise ein Verfahren mit allen Merkmalen des Patentanspruchs 14. Vorteilhafte Ausgestaltungen der Erfindung finden sich in den Unteransprüchen.

Die erfindungsgemäße Vorrichtung zur Pflanzenregulierung in einem Kulturpflanzenbestand ist über diesen Kulturpflanzenbestand bewegbar und weist folgende Merkmale auf:
a) wenigstens ein Flüssigkeitsspeicher zur Aufnahme von Flüssigkeit,
b) wenigstens ein mit dem wenigstens einen Flüssigkeitsspeicher verbundenes erstes Leitungssystem für Flüssigkeit, welches mit wenigstens einem über ein Ventil ansteuerbaren Flüssigkeitsauslass versehen ist,
c) eine Erkennungseinrichtung zur Erkennung von Pflanzen,
d) eine Steuereinrichtung zur Ansteuerung des wenigstens einen Ventils des ersten Leitungssystems für Flüssigkeit,
wobei die Erkennungseinrichtung zur Differenzierung von Pflanzen im Kulturpflanzenbestand zwischen gewollten Pflanzen und ungewollten Pflanzen ausgebildet ist und die Steuereinrichtung zum Öffnen der Ventile des ersten Leitungssystems ausschließlich zum Besprühen der ungewollten Pflanzen im Kulturpflanzenbestand mit Flüssigkeit ausgebildet ist. Erfindungsgemäß ist vorgesehen, dass ungewollte Pflanzen durch die Wirkung der kinetischen und/oder thermischen Energie der Flüssigkeit geschädigt oder abgetötet werden, wobei die Schädigung durch die Wirkung der kinetischen Energie vorzugsweise durch Spülen bzw. Mitreißen der Pflanze in den Boden erfolgt und die thermische Schädigung durch Aufbringen heißer Flüssigkeit und/oder Flüssigkeitsdampf mit einer Temperatur von über 333 K erfolgt.

Pflanzen lassen sich durch die kinetische Energie des Wassers mechanisch schädigen, ohne dass wie im Stand der Technik gemäß der DE 10 2015 119 026 A1 separate Werkzeuge, wie beispielsweise Unterschneidemesser, Schare, Walzen, Nachlaufharken oder Bürsten zum Einsatz kommen müssen. Das Prinzip, Objekte durch die kinetische Energie des Wassers und ggf. eines abrasiven Zusatzstoffes mechanisch zu bearbeiten ist vom Verfahren des Wasserstrahlschneidens bekannt. Dieses Prinzip lässt sich auch für die Regulierung ungewollter Pflanzen nutzen. Analog zur Pflanzenregulation mit Heißwasser, wo die Flüssigkeit als Träger von pflanzenschädigender thermischer Energie verwendet wird, dient hier die Flüssigkeit als Träger kinetischer Energie, die eine mechanische Schädigung der Pflanzen bewirken kann. Ebenso wie beim Einsatz heißer Flüssigkeit fehlt es aber an Lösungen, die einen Einsatz des Wirkprinzips im Kulturpflanzenbestand möglich machen.

Die Schädigung kann erfindungsgemäß direkt durch die Wirkung der kinetischen Energie der Flüssigkeit, . d.h. durch einen Wasserstrahl hoher Geschwindigkeit und ggf. eines abrasiven Zusatzstoffes auf die Pflanze erfolgen. Insbesondere erfolgt die Schädigung aber dadurch, dass Pflanzen durch die Flüssigkeit, welche vorzugsweise als nach unten gerichteter Rundstrahl mit hoher Geschwindigkeit austritt, mitgerissen und in den Boden bzw. in ein durch den Wasserstrahl entstehendes Loch gespült werden. Hierdurch werden die ungewollten Pflanzen entwurzelt, teilweise verschüttet und vom Sonnenlicht abgeschnitten, wodurch sie in der Folge absterben oder zumindest vorübergehend so im Wachstum gehemmt sind, dass sie für die gewollten Pflanzen eine geringere Konkurrenz darstellen. Auf diese Weise kann die kinetische Energie der Flüssigkeit die ungewollten Pflanzen schädigen oder abtöten. Durch die gezielte Ausbringung ist es dabei ermöglicht, unzulässig hohe Schäden an den gewollten Pflanzen zu vermeiden.

Ergänzend oder alternativ zur Schädigung durch die Wirkung der kinetischen Energie der Flüssigkeit hat es sich als vorteilhaft erwiesen, ungewollte Pflanzen thermisch zu schädigen und abzutöten, indem heiße Flüssigkeit und/oder Flüssigkeitsdampf mit einer Temperatur von über 333 K auf die ungewollten Pflanzen appliziert wird.

Durch gezieltes Ausbringen heißer Flüssigkeit auf die ungewollten Pflanzen können die ungewollten Pflanzen im Kulturpflanzenbestand thermisch geschädigt und/oder zerstört werden, sodass diese den Kulturpflanzen weniger Konkurrenz machen. Dazu ist vorzugsweise in dem wenigstens einen ersten Leitungssystem ein Erhitzer angeordnet, der die aus dem Flüssigkeitsspeicher in das wenigstens eine erste Leitungssystem geförderte Flüssigkeit auf eine Temperatur von über 333 K, vorzugsweise auf 371 K +/- 2 K erhitzt.

Die Erkennungseinrichtung detektiert vorzugsweise wenigstens einen besonders vulnerablen Punkt oder Bereich je Pflanze und übermittelt dessen Position an die Steuerungseinrichtung.

Besonders vulnerable Punkte sind insbesondere die Wuchszentren und die Wurzelpunkte, d.h. die Punkte, an denen die Pflanzen aus dem Boden austreten. So können die ungewollten Pflanzen sehr gezielt mit Flüssigkeit getroffen werden, ohne Schäden an gewollten Pflanzen anzurichten. Durch gezieltes Aufbringen einer Flüssigkeit auf die als vulnerable Punkte ausgebildeten Wuchszentren und Wurzelpunkte können diese irreparabel geschädigt werden, sodass die nicht gewollte Pflanze abstirbt.

Zwar sind punktgenaue Applikationen von Wasser in vielfältiger Weise aus dem Stand der Technik in vielen Technikbereichen bekannt. Allerdings ist diese Ausgestaltung der Erfindung zur Schädigung der als vulnerable Punkte ausgebildeten Wuchszentren und Wurzelpunkte besonders effektiv zur Un- beziehungsweise Beikrautregulierung im Kulturpflanzenbestand. Die Ausbringung auf besonders vulnerable Punkte der Pflanzen minimiert die nötige Flüssigkeitsmenge. Durch die minimierte Flüssikeitsmenge wird auch die unerwünschte Verteilung der Flüssigkeit und ihrer schädigenden Wirkung begrenzt und somit Schäden an gewollten Pflanzen vorgebeugt. Daher hat das Ausbringen auf besonders vulnerable Punkte der Pflanzen nicht nur ökonomische Vorteile im Sinne eines reduzierten Flüssigkeits- und Energieeinsatzes, sondern ermöglicht die Ausbringung noch dichter an der Kulturpflanze, wodurch die Quote an behandelten ungewollten Pflanzen gesteigert werden kann.

Aber auch bei sehr präziser, punktueller Ausbingung kann sich die Flüssigkeit unmittelbar nach der Applikation auf die ungewollten Pflanzen mehr oder weniger unkontrolliert verteilen - es verläuft, spritzt und versickert. Wird heiße Flüssigkeit verwendet, kühlt diese dabei zwar schon etwas ab, sie besitzt aber immer noch genügend thermische Energie, um empfindliche Kulturpflanzen in der unmittelbaren Umgebung zu schädigen oder abzutöten.

Zwar lässt sich das Problem umgehen, indem heißes Wasser nur in hinreichendem Abstand zu erkannten Kulturpflanzen ausgebracht wird, dadurch bleibt aber auch ein gewisser Teil ungewollter Pflanzen unbehandelt.

Um heiße Flüssigkeit noch dichter an sensiblen Kulturpflanzen ausbringen zu können, ohne diese unzulässig thermisch zu schädigen, ist vorzugsweise wenigstens ein mit dem wenigstens einen Flüssigkeitsspeicher verbundenes zweites Leitungssystem für Flüssigkeit vorgesehen, welches mit wenigstens einem über ein Ventil ansteuerbaren Flüssigkeitsauslass versehen ist, der über eine Steuereinrichtung angesteuert wird. Damit ist es möglich, die gewollten Kulturpflanzen effektiv vor schädigender thermischer Belastung zu schützen: Gleichzeitig mit oder zeitnah zu dem Besprühen der ungewollten Pflanzen mit heißer Flüssigkeit werden nämlich die gewollten Pflanzen mit kalter Flüssigkeit besprüht. Wenn nun ein Teil der heißen Flüssikeit durch unerwünschte Verteilung eine Kulturpflanze erreicht, bleibt diese vor einer thermischen Belastung geschützt, indem die hier ausgebrachte kalte Flüssigkeit thermische Energie der heißen Flüssigkeit aufnimmt. Durch diese Umverteilung der thermischen Energie der Flüssigkeiten werden die gewollten Pflanzen im Kulturpflanzenbestand effektiv vor zu hoher, schädigender thermischer Belastung geschützt. Zugleich ist durch das gezielte Aufbringen der kalten Flüssigkeit auf die Kulturpflanzen ermöglicht, dass die heiße Flüssigkeit sehr dicht an den Kulturpflanzen ausgebracht beziehungsweise appliziert werden kann, ohne die Kulturpflanzen selbst thermisch zu beschädigen.

Bekannte Anwendungen zur thermischen Beikrauregulierung bringen ein kühlendes Medium nur reihenbezogen, d.h. durchgängig im Bereich der Kulturpflanzenreihe aus. Durch die erfindungsgemäße Ausbildung der Vorrichtung ist im Gegensatz zu bekannten Anwendungen mit reihenbezogener Ausbringung von Kaltschaum, Kaltluft oder Sprühnebel zum Kulturpflanzenschutz eine sehr viel effektiverer Schutz gegeben, da jede Kulturpflanze gezielt und räumlich sehr begrenzt mit kalter Flüssigkeit besprüht werden kann. Durch die gezielte, räumlich begrenzte Ausbringung kalter Flüssigkeit wird nicht nur die Aufwandmenge reduziert, sondern auch die thermische Behandlung der ungewollten Pflanzen weniger beeinträchtigt.

Beim Bewegen der erfindungsgemäßen Vorrichtung kann mittels der Ausbildung der Erkennungseinrichtung zur Erkennung unterschiedlicher Pflanzen nun gezielt zwischen einer gewünschten Kulturpflanze und einem unerwünschten Bei- beziehungsweise Unkraut differenziert werden. Das Bei- beziehungsweise Unkraut kann mit Flüssigkeit besprüht werden und durch die Wirkung der kinetischen Energie der Flüssigkeit geschädigt oder abgetötet werden, wobei die Flüssigkeit bevorzugt nur im Bereich besonders vulnerabler Punkte ausgebracht wird. Vorzugsweise wird es aber mit heißer Flüssigkeit und/oder Flüssigkeitsdampf besprüht und damit thermisch derart geschädigt, dass es abstirbt. In der Umgebung des mit heißer Flüssigkeit besprühten Bei- beziehungsweise Unkrauts detektierte Kulturpflanzen werden bevorzugt mit kalter Flüssigkeit beziehungsweise kaltem Flüssigkeitsnebel besprüht und somit vor thermischer Beschädigung geschützt.

Es hat sich aus ökologischer und ökonomischer Sicht - auch im Hinblick auf einen Bioanbau der Kulturpflanzen unter Verzicht auf Kunstdünger und Herbiziden - als vorteilhaft erwiesen, Wasser sowohl für die heiße als auch die kalte Flüssigkeit zu verwenden.

Allerdings können auch wässrige Lösungen oder ökologisch unschädliche Flüssigkeiten eingesetzt werden, im Falle erwünschter mechanischer Schädigung auch mit einem abrasiven Zusatzstoff.

Für eine thermische Schädigung hat es sich als vorteilhaft erwiesen, dass beim Besprühen der ungewollten Pflanzen beziehungsweise Bei- oder Unkräuter die heiße Flüssigkeit und/oder der Flüssigkeitsdampf eine Temperatur von über 333 K, vorzugsweise von 368 K bis 373 K aufweist, während beim gleichzeitigen Besprühen der gewollten Kulturpflanzen die kalte Flüssigkeit und/oder der kalte Flüssigkeitsnebel eine Temperatur von unter 333 K, vorzugsweise Umgebungstemperatur aufweist.

Grundsätzlich ist es möglich, bereits erhitzte Flüssigkeit mitzuführen, es hat sich aber als vorteihaft erwiesen, die Flüssigkeit durch einen im ersten Leitungssystem angeordneten Erhitzer auf die vorgesehene Temperatur von beispielsweise 371 K +/- 2 K zu erwärmen und diesen Temperaturbereich mittels eines integrierten Temperaturreglers beizubehalten. Durch diese Ausgestaltung der Erfindung ist es ermöglicht, dass kein großer Vorrat an heißer Flüssigkeit im Flüssigkeitsspeicher bevorratet werden muss. Vielmehr kann der Vorrat an Flüssigkeit an die Umgebungstemperatur angepasst sein, wodurch eine thermische Isolierung des Flüssigkeitsspeichers obsolet wird.

In einer Ausgestaltung mit thermischer Schädigung dient das erste Leitungssystem als Heißflüssigkeitsleitung. Darin wird Flüssigkeit aus dem als Vorratsbehälter fungierendem wenigstens einen Flüssigkeitsspeicher, in dem die Flüssigkeit der Einfachheit halber Umgebungstemperatur aufweist, zum Erhitzer geführt, in dem die Flüssigkeit auf die vorgesehene Temperatur erhitzt wird. Von diesem wird es zu dem wenigstes einen Ventil geführt. Flüssigkeit, die nicht durch das Ventil ausgelassen wird, wird vorzugsweise zurück zum Erhitzer gepumpt, um konstant heißes Wasser an den Ventilen bereit zu stellen. Das wenigstens eine Ventil ist mit einer oder mehreren Auslassöffnungen verbunden, die vorzugsweise in einer Reihe über der zu behandelnden Fläche mit Unkraut und Kulturpflanzen angeordnet sind. Wenigstens ein flüssigkeitsführendes Bauteil zwischen dem wenigstens einem Ventil und der dazugehörigen Auslassöffnung, welches die Flüssigkeit vom Ventil bis zur Auslassöffnung leitet, wird vorzugsweise vorgewärmt durch eine wärmeleitende Verbindung zur heißen Flüssigkeit im ersten Leitungssystem, um ein Abkühlen der Flüssigkeit vor Austritt aus der Auslassöffnung zu minimieren. In einer besonders vorteilhaften Ausgestaltung erfolgt das Vorwärmen des Bauteils dadurch, dass es in direktem Kontakt mit der Flüssigkeit des ersten Leitungssystems steht, z.B. in dem es von der heißen Flüssigkeit des ersten Leitungssystems durchströmt oder umspült wird.

Das Gesamtsystem wird über die Fläche bewegt, die Auslassöffnungen sind dabei in einer vorteilhaften Ausführungsform quer zur Bewegungsrichtung angeordnet und auf die Fläche gerichtet, vorzugsweise senkrecht nach unten. Befindet sich eine Auslassöffnung über oder in Nähe einer Unkrautpflanze, öffnet das entsprechende Ventil, oder bei nur einem Ventil wird es vor dem Öffnen in die entsprechende Position verfahren und lässt eine Flüssigkeitsmenge, vorzugsweise eine Heißwassermenge auf die Pflanze, wodurch diese direkt abstirbt oder so geschädigt wird, dass sie in der Folge abstirbt. Gesteuert werden die Ventile auf Basis einer Erkennungseinrichtung, welche Pflanzen erkennt und ungewollte Pflanzen beziehungsweise Bei- oder Unkraut von den gewollten Kulturpflanzen unterscheidet.

Vorzugsweise wird kalte Flüssigkeit aus dem Vorratsbehälter direkt zu dem wenigstens einen Ventil des zweiten Leitungssystem geführt. Dieses Ventil ist ebenso mit je einer oder mehreren Auslassöffnungen verbunden. Die Auslassöffnungen für Kaltwasser sind vorzugsweise ebenso in einer Reihe quer zur Bewegungsrichtung beziehungsweise bei nur einem Ventil quer dazu verfahrbar angeordnet, auf die Fläche gerichtet und in der Nähe der Auslassöffnungen für Heißwasser angebracht, vorzugsweise in Bewegungsrichtung dahinter. Befindet sich eine Kulturpflanze unter einer oder mehrerer Auslassöffnungen, öffnen die entsprechenden Ventile und geben eine Kaltwassermenge auf die Kulturpflanze, um diese vor thermischen Schäden durch das in der Nähe ausgebrachte heiße Wasser zu schützen.

Grundsätzlich müssen die Ventile der Leitungssysteme nicht quer zur Bewegungsrichtung der erfindungsgemäßen Vorrichtung angeordnet sein beziehungsweise bei einem Ventil in einem Leitungssystem quer dazu verfahrbar sein. Auch andere Anordnungen sind denkbar. Auch können die Auslassöffnungen als verschwenkbare Düsen ausgebildet sein, die über die Steuereinrichtung ansteuerbar sind.

Ein besonderer Vorteil der erfindungsgemäßen Vorrichtung liegt darin, dass sowohl das Aufbringen von heißer als auch kalter Flüssigkeit millimetergenau erfolgen kann und somit gezielt ungewollte Pflanzen zerstört und gewollte Kulturpflanzen geschützt werden, auch wenn diese nur wenige Millimeter voneinander entfernt wachsen. Die Ausgestaltung mit mehreren Ventilen, die quer zur Bewegungsrichtung angeordnet sind, hat den Vorteil, dass damit höhere Arbeitsgeschwindigkeiten des Gesamtsystems möglich sind als bei nur einem Ventil, dessen Auslassöffnung an die entsprechende Position verfahren oder verschwenkt wird.

Als Ventile werden bevorzugt Magnetventile eingesetzt, die durch Schaltzeiten im Millisekundenbereich eine hohe Präzision in der Aufbringung der Flüssigkeit auf die Pflanzen auch bei erhöhter Bewegungsgeschwindigkeit der Vorrichtung gewährleisten.

Die Vorrichtung wird vorzugsweise mit einer Geschwindigkeit von 0,1-10km/h, besonders vorzugsweise mit 0,5-5 km/h über die Fläche bewegt. Dabei wird die mindestens eine Auslassöffnung vorzugsweise in einem Abstand von bis zu 50cm, besonders vorzugsweise in einem Abstand von 3cm bis 30cm über der Fläche geführt. Vorzugsweise ist dazu der Teil der Vorrichtung, der die Auslassöffnungen beinhaltet, in der Höhe verstellbar, besonders vorzugsweise geschieht diese Höhenverstellung bzw. Höhenkonstanthaltung automatisch.

Für ein zielsicheres Treffen der Pflanzen mit der Flüssigkeit ist eine gleichförmige, schwingungsarme Bewegung der Vorrichtung bzw. des Teils, der die Auslassöffnung und vorzugsweise auch die Kamera beinhaltet, vorteilhaft. Daher ist vorzugsweise dieser Teil schwingungsdämpfend gelagert.

Schwingungen quer zur Bewegungsrichtung werden vorzugsweise durch wenigstens eine im Boden laufende Schneidscheibe unterbunden bzw. minimiert. Varianten dieser Schwingungsunterdrückung stellen wenigstens ein einfaches Rad oder auch ein im Boden laufendes schneidendes Element wie z.B. ein vertikal angeordnetes Schar dar.

Nach einer vorteilhaften Ausgestaltung der Erfindung ist es vorgesehen, dass das wenigstens eine erste Leitungssystem mit dem Erhitzer als Zirkulationssystem ausgebildet ist, wobei die Leitungen zwischen Erhitzer und Ventilen vorzugsweise thermisch isoliert sind. Durch die Zirkulationsleitung ist es ermöglicht, die heiße Flüssigkeit zwischen dem wenigstens einen Ventil und dem Erhitzer in einem Kreislauf zu führen, um konstant heißes Wasser an dem wenigstes einen Ventil bereit zu stellen. Damit die heiße Flüssigkeit in diesem Kreislauf kontinuierlich auf gleichbleibender Temperatur gefördert werden kann, ist in vorteilhafter Weise in dem Zirkulationssystem eine Umlaufpumpe angeordnet.

Der Erhitzer ist vorzugsweise als mit Propangas zu betreibender Gas-Durchlauferhitzer ausgebildet. Mittels des Gas-Durchlauferhitzers und einem Temperaturregler ist es in einfacher Weise möglich, die heiße Flüssigkeit auf einer relativ konstanten Temperatur von beispielsweise 371 K +/- 2 K zu halten. Durch diese Ausgestaltung der Erfindung ist es ermöglicht, dass kein großer Vorrat an heißer Flüssigkeit im Flüssigkeitsspeicher bevorratet werden muss. Vielmehr kann der Vorrat an Flüssigkeit an die Umgebungstemperatur angepasst sein, wodurch eine thermische Isolierung des Flüssigkeitsspeichers obsolet wird.

Grundsätzlich ist es möglich, den Flüssigkeitsspeicher unter Druck zu halten, um so die Flüssigkeit in die beiden Leitungssysteme zu fördern. Allerdings muss ein derartiger Flüssigkeitsspeicher dann auch druckdicht ausgebildet sein. Alternativ ist es allerdings auch möglich, dass in den wenigstens einem ersten Leitungssystem und in dem wenigstens einem zweiten Leitungssystem jeweils eine Förderpumpe zur Förderung von Flüssigkeit aus dem Flüssigkeitsspeicher in die Leitungssysteme angeordnet ist. Durch diese Ausgestaltung ist es möglich, einen Flüssigkeitsspeicher zu verwenden, der nicht druckdicht ausgebildet sein muss. Alternativ ist es möglich, eine gemeinsame Förderpumpe für beide Leitungssysteme zu verwenden.

Nach einer besonders vorteilhaften Ausgestaltung der Erfindung ist es vorgesehen, dass die Erkennungseinrichtung zur Erkennung unterschiedlicher Pflanzen wenigstens einen Sensor, insbesondere einen optischen Sensor, beziehungsweise eine Kamera zur Detektion elektromagnetischer Wellen aufweist. Insbesondere sollen dabei elektromagnetische Wellen im sichtbaren beziehungsweise infraroten Bereich detektierbar sein. Hierdurch ist ermöglicht, die Pflanzen im Kulturpflanzenbestand zu detektieren und zu differenzieren, sodass gezielt ungewollte Pflanzen beziehungsweise Bei- oder Unkräuter mechanisch und/oder thermisch behandelt beziehungsweise zerstört werden können, während die gewollten Kulturpflanzen durch das Beaufschlagen mit kalter Flüssigkeit vor thermischen Belastungen geschützt werden.

Dabei hat es sich als vorteilhaft erwiesen, dass der von der Kamera erfasste Bereich künstlich beleuchtet und vorzugsweise mittels einer Verschattungseinrichtung von direkter Sonneneinstrahlung abgeschirmt ist. Damit liefert die Kamera auch bei wechselnden Umgebungs- und Beleuchtungsbedingungen (Tag/Nacht, Sonne/Wolken) Bilddaten mit gleichbleibender Qualität und Erscheinung, was für eine zuverlässige Erkennung von Vorteil ist. Vorzugsweise ist die Kamera in Bewegungsrichtung vor dem wenigstens einen Flüssigkeitsauslass angeordnet.

Um eine exakte Differenzierung zwischen den Pflanzen im Kulturpflanzenbestand vornehmen zu können, beinhaltet die Erkennungseinrichtung vorzugsweise wenigstens ein künstliches neuronales Netz. Dieses wurde bevorzugt mit Hilfe einer umfangreichen Bilddatenbank darauf trainiert, gewollte und ungewollte Pflanzen zu erkennen, sie voneinander zu unterscheiden und in einer besonders vorteilhaften Ausgestaltung besonders vulnerable Punkte der Pflanzen zu detektieren und deren Positionen an die Steuerungseinrichtung zu übergeben. Insbesondere die Detektion des Wuchszentrums sowie des Wurzelpunktes bzw. des Punktes, an denen eine Pflanze aus dem Boden austritt, ist hier vorteilhaft.

Eine vorab so trainierte Erkennungseinrichtung benötigt im laufenden Betrieb somit keinen Zugriff auf eine (Bild-) Datenbank, um die Erkennung auszuführen.

Für eine möglichst exakte Positionsbestimmung der erkannten Pflanzen bzw. der detektierten Punkte erfasst die Kamera oder ein zusätzlicher Sensor auch den Abstand zum Boden bzw. zu den Pflanzen. In einer besonders vorteilhaften Ausgestaltung ist dabei die Kamera als 3D-Kamera bzw. Tiefenkamera ausgebildet, wodurch eine einfache Umrechnung der Bildpunkte in Koordinatenpunkte ermöglicht ist.

Für eine genaue Applikation der Flüssigkeit aus der Bewegung heraus, d.h. während die Vorrichtung über die Fläche bewegt wird, ist es vorteilhaft, dass die Steuereinrichtung die relative Position der Vorrichtung und/oder ihre Bewegung bzw. Geschwindigkeit kennt. In Kombination mit den Positionsdaten der erkannten Pflanzen kann die Steuereinrichtung damit die Zeitpunkte zum Öffnen (und Schließen) des oder der Ventile bestimmen. Dies gilt insbesondere, wenn die Erkennungseinrichtung ein gewisses Zeitintervall für die Erkennung benötigt, in welchem die Vorrichtung schon signifikant weiterbewegt wurde.

In der einfachsten Form wird die Bewegungsgeschwindigkeit der Vorrichtung konstant gehalten und als fester Wert in der Steuereinrichtung eingestellt oder einprogrammiert. Vorteilhafter ist es, wenn die Erkennungs- oder Steuereinrichtung die Bewegungs- oder Geschwindigkeitsdaten selbst erfasst, so kann das System auch bei veränderlichen Geschwindigkeiten und ungleichförmiger Bewegung genau arbeiten.

Zur Ermittlung der Bewegungsdaten hat es sich als vorteilhaft erwiesen, dass die Steuereinrichtung die Bewegungsdaten der Vorrichtung direkt aus den Bilddaten einer oder mehrerer Kameras errechnet. Dazu wird bevorzugt die Überlappung nacheinander aufgenommener Bilder bestimmt, woraus sich in Kombination mit dem Zeitintervall zwischen den Aufnahmen die Bewegungsgeschwindigkeit errechnen lässt. Ergänzend oder alternativ zur Ermittlung der Bewegungsdaten aus den Bilddaten ist es vorteilhaft, dass die Vorrichtung einen mit der Steuereinrichtung kommunizierenden GPS-Sensor aufweist. Alternativ oder Ergänzend kann auch ein anderer Sensor zur Erfassung der Bewegung bzw. der Geschwindigkeit verwendet werden. Hierdurch ist eine genaue Bewegungs- bzw. Geschwindigkeitsbestimmung ermöglicht für eine exakte Heiß- und Kaltflüssigkeitsanwendung während der Bewegung der Vorrichtung über den Kulturpflanzenbestand.

Eine Variante der Flüssigkeitsausbringung mit der erfindungsgemäßen Vorrichtung stellt die vollflächige Ausbringung heißer Flüssigkeit dar, wobei die Positionen oder Bereiche, an denen sich gewollte Pflanzen befinden, gezielt ausgespart und vorzugsweise mit kalter Flüssigkeit geschützt werden. Diese Variante hat zwar zum Nachteil, dass sie einen deutlich höheren Energie- und Flüssigkeitsverbrauch bedeutet, vorteilhaft ist dabei aber, dass durch die flächige Ausbringung auch ungewollte Pflanzen abgetötet werden, die von der Erkennungseinrichtung nicht erfasst werden. Das können beispielsweise sehr kleine Pflanzen sein, die noch nicht oder kaum aus der Oberfläche herausschauen oder solche, die aufgrund ihrer Größe oder Beschaffenheit nicht detektiert werden.

In einer vorteilhaften Ausgestaltung der Erfindung ist die erfindungsgemäße Vorrichtung als Anhänge- beziehungsweise Anbauvorrichtung für ein landwirtschaftliches Fahrzeug ausgebildet, sodass sie keinen eigenen Antrieb benötigt.

Alternativ ist jedoch möglich, dass die erfindungsgemäße Vorrichtung als eigenständiges Fahrzeug mit eigenem Antrieb ausgebildet ist. Bei einer derartigen Ausgestaltung der Erfindung kann die Vorrichtung ggf. auch autonom arbeiten, ohne dass Bedienpersonal vor Ort sein muss.

Weiterhin ist es in einer Ausgestaltung der Erfindung vorgesehen, dass die erfindungsgemäße Vorrichtung eine autarke Stromversorgung aufweist, insbesondere für die künstliche Beleuchtung, die Pumpen und die Elektronik der Erkennungs- und Steuereinrichtung. Dies kann auch bei Ausbildung der erfindungsgemäßen Vorrichtung als Anhänge- beziehungsweise Anbauvorrichtung für ein landwirtschaftliches Fahrzeug vorteilhaft sein, da deren Generator oftmals nicht mit einer entsprechenden Leistung ausgestattet ist.

Das erfindungsgemäße Verfahren zur Pflanzenregulierung in einem Kulturpflanzenbestand weist folgende Verfahrensschritte auf:
i Erfassen eines Teils der Pflanzen in einem Kulturpflanzenbestand
ii ein Differenzieren der erfassten Pflanzen in gewollte Kulturpflanzen und andere ungewollte Pflanzen und nachfolgend
iii ein Besprühen der anderen ungewollten Pflanzen mit Flüssigkeit, vorzugsweise mit hoher kinetischer und/oder thermischer Energie, und/oder Flüssigkeitsdampf und nachfolgend,
iv ein Erfassen eines weiteren Teils der Pflanzen in einem Kulturpflanzenbestand und eine Wiederholung der Verfahrensschritte i bis iv stattfindet,
und zeichnet sich dadurch aus, dass ungewollte Pflanzen durch die Wirkung der kinetischen und/oder themischen Energie der Flüssigkeit geschädigt oder abgetötet werden, wobei die Schädigung durch die Wirkung der kinetischen Energie vorzugsweise durch Spülen bzw. Mitreißen der Pflanze in den Boden erfolgt und die thermische Schädigung durch heiße Flüssigkeit und/oder Flüssigkeitsdampf mit einer Temperatur von über 333 K erfolgt.

In einer besonders vorteilhaften Ausgestaltung erfolgt gleichzeitig oder zeitnah zum Besprühen der ungewollten Pflanzen mit Flüssigkeit hoher thermischer und/oder kinetischer Energie oder Flüssigkeitsdampf ein Besprühen der gewollten Kulturpflanzen mit kalter Flüssigkeit und/oder kaltem Flüssigkeitsnebel, wodurch die gewollten Pflanzen vor thermischem Schäden geschützt werden. Diese zweite Flüssigkeit und/oder Flüssigkeitsnebel, welche eine Temperatur von unter 333 K, vorzugsweise Umgebungstemperatur aufweist, hat vorzugsweise eine geringe kinetische Energie, wodurch die Kulturpflanze nicht beschädigt wird.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiel einer erfindungsgemäßen Vorrichtung in einer schematischen Darstellung,
- Figur 2:: eine schematische Detailansicht der Vorrichtung gemäß Figur 1,
- Figur 3:: eine perspektivische Darstellung einer Einzelheit einer erfindungsgemäßen Vorrichtung und
- Figur 4:: eine schematische Darstellung eines weiteren Ausführungsbeispiels einer erfindungsgemäßen Vorrichtung.

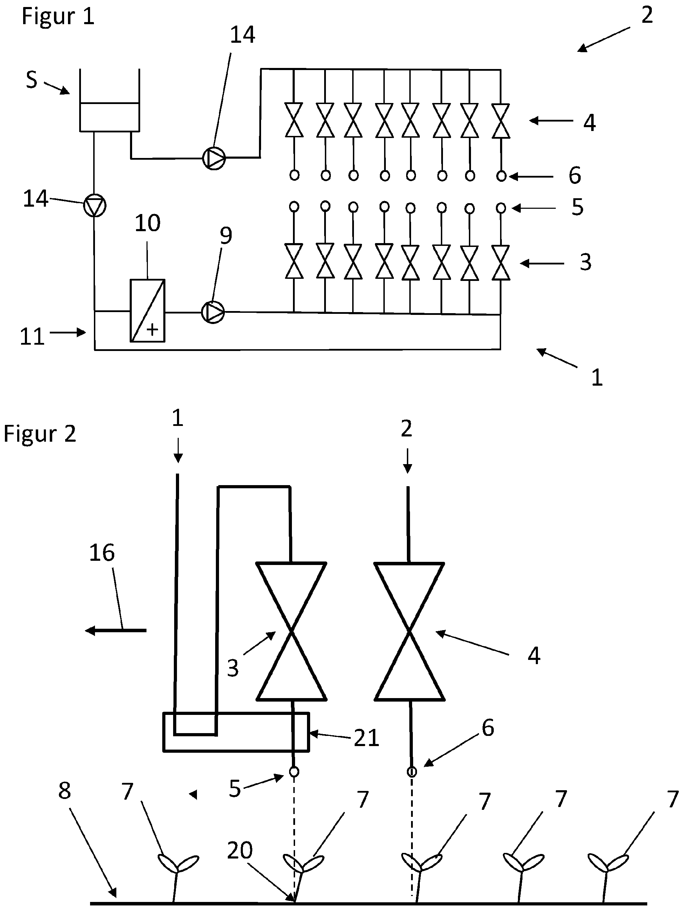

In der Figur 1 ist ein Ausführungsbeispiel des gesamten Fluidsystems einer erfindungsgemäßen Vorrichtung zur Pflanzenregulierung in einem Kulturpflanzenbestand dargestellt, wobei diese Vorrichtung über den Kulturpflanzenbestand bewegbar ist. In dem Ausführungsbeispiel der Figur 1 ist die Vorrichtung zur Applikation von heißer Flüssigkeit und kalter Flüssigkeit ausgebildet. Dazu weist die Vorrichtung einen Flüssigkeitsspeicher S auf, in dem die auf die Pflanzen zu applizierende Flüssigkeit - im einfachsten Fall Wasser - bevorratet ist. An dem Flüssigkeitsspeicher S ist ein erstes Leitungssystem 1 für Flüssigkeit angeschlossen, welches mit über Ventile 3 ansteuerbaren Flüssigkeitsauslässen 5 versehen ist. Über dieses erste Leitungssystem 1 wird mittels einer Förderpumpe 14 auf Umgebungstemperatur befindliche Flüssigkeit aus dem Flüssigkeitsspeicher S zu einem Zirkulationssystem 11 des ersten Leitungssystems 1 gefördert. In dem Zirkulationssystem 11 ist ein Erhitzer 10 in Form eines propangasbetriebenen Gas-Durchlauferhitzers angeordnet, dem eine Umlaufpumpe 9 nachgeschaltet ist. In dem Erhitzer 10 wird die mittels der Förderpumpe 14 geförderte Flüssigkeit auf eine Temperatur von 371 K +/- 2 K erhitzt und über die Umlaufpumpe 9 zu den Ventilen 3 des Leitungssystems 1 gefördert. Befinden sich diese Ventile 3 in ihrer geschlossenen Stellung, zirkuliert die erhitzte Flüssigkeit im Zirkulationssystem 11 des ersten Leitungssystems 1 kontinuierlich, und wird dabei im Erhitzer 10 - sofern notwendig - wieder auf die gewünschte Temperatur erhitzt, wenn sich die Flüssigkeit im Zirkulationssystem 11 mittlerweile abgekühlt hat.

An dem Flüssigkeitsspeicher S ist zudem ein zweites Leitungssystem 2 angeschlossen, welches ebenfalls mit einer Förderpumpe 14 versehen ist, welche die auf Umgebungstemperatur befindliche Flüssigkeit im Flüssigkeitsspeicher S zu Ventilen 4 des zweiten Leitungssystems 2 fördert. Sofern die Ventile 4 geschlossen sind, findet keine Förderung von Flüssigkeit durch die Förderpumpe 14 des zweiten Leitungssystems 2 statt. Ist jedoch wenigstens ein Ventil 4 des zweiten Leitungssystems 2 geöffnet, wird die auf Umgebungstemperatur befindliche Flüssigkeit über eine Auslassöffnung 6 des jeweils offenen Ventils 4 abgegeben.

Das Öffnen und Schließen der vorzugsweise als Magnetventile ausgebildeten Ventile 3 und 4 erfolgt dabei über eine in Figur 1 nicht dargestellte Steuereinrichtung. Die Steuereinrichtung erhält dabei Daten von einer in Figur 1 ebenfalls nicht dargestellten Erkennungseinrichtung zur Erkennung von Pflanzen. Die Erkennungseinrichtung ist dabei derart ausgebildet, dass sie zwischen verschiedenen Pflanzen differenzieren kann. Insbesondere kann sie zwischen einer im Kulturpflanzenbestand gewollten Pflanze und nicht gewollten Pflanzen unterscheiden und vorzugsweise besonders vulnerable Punkte wie ein Wuchszentrum und/oder ein Wurzelpunkt 20 erkennen. Sofern eine ungewollte Pflanze detektiert wird, wird die Position der ungewollten Pflanze an die Steuereinrichtung übermittelt, die dann beim Bewegen der Vorrichtung über diese ungewollte Pflanze das entsprechende Ventil 3 des ersten Leitungssystems 1 öffnet und somit heiße Flüssigkeit, insbesondere heißes Wasser, über die Auslassöffnung 5 auf diese ungewollte Pflanze appliziert. Durch die Applikation beziehungsweise das Besprühen dieser ungewollten Pflanze mit der auf ca. 371 K befindlichen Flüssigkeit, wird die Pflanze derart beschädigt, dass sie in Folge der Applikation dieser thermischen Energie abstirbt bzw. sich deutlich langsamer weiterentwickelt. Hat die Erkennungseinrichtung in der Umgebung der Pflanze, die mit heißer Flüssigkeit besprüht wird, Pflanzen detektiert, die im Kulturpflanzenbestand gewollt sind, wird auch das jeweilige Ventil 4 des Leitungssystems 2 durch die Steuereinrichtung geöffnet, sodass über diese Pflanze kalte Flüssigkeit, insbesondere auf Umgebungstemperatur befindliches Wasser appliziert werden kann. Durch diese Applikation des kalten Wassers beziehungsweise der kalten Flüssigkeit wird die jeweilige gewollte Pflanze vor thermischen Schäden geschützt, die durch verlaufendes und/oder spritzendes heißes Wasser beziehungsweise heißer Flüssigkeit auftreten können.

In der Figur 2 ist eine Detailansicht der Vorrichtung gemäß Figur 1 dargestellt, mit einem Ventil 3 und eine Auslassöffnung 5 des ersten Leitungssystems 1 für eine Heißflüssigkeitsapplikation und ein Ventil 4 mit einer Auslassöffnung 6 des zweiten Leitungssystems für eine Kaltflüssigkeitsapplikation. Die Vorrichtung wird dabei über eine Oberfläche 8, welche mit Pflanzen 7 versehen ist in Richtung des Pfeils 16 bewegt. Wird eine der Pflanzen 7 als ungewollte Pflanze im Kulturpflanzenbestand detektiert, so öffnet das Ventil 3 des Flüssigkeitssystems 1 und appliziert über die Auslassöffnung 5 heiße Flüssigkeit auf diese Pflanze bzw. bevorzugt auf ihren Wurzelpunkt 20. Wird dabei gleichzeitig durch die Erkennungseinrichtung eine gewollte Pflanze in der Nachbarschaft dieser mit heißer Flüssigkeit beaufschlagten ungewollten Pflanze detektiert, so wird über die Steuereinrichtung, die in Figur 2 ebenfalls nicht dargestellt ist, dass Ventil 4 des Leitungssystems 2 geöffnet, sodass über die Austrittsöffnung 6 kalte Flüssigkeit auf diese Pflanze appliziert werden kann, sodass diese dadurch vor thermischer Belastung durch spritzende oder verlaufende heiße Flüssigkeit geschützt ist, die durch das erste Leitungssystem 1 auf die ungewollte Pflanze appliziert wurde. Erkennbar ist hier ebenfalls die Vorwärmung des flüssigkeitsführenden Bauteils 21 zwischen Ventil und Auslassöffnung durch die Flüssigkeit im ersten Leitungssystem, indem diese durch das Bauteil 21 geleitet wird. Dadurch wird das Abkühlen der Flüssigkeit vor Austritt aus der Vorrichtung minimiert.

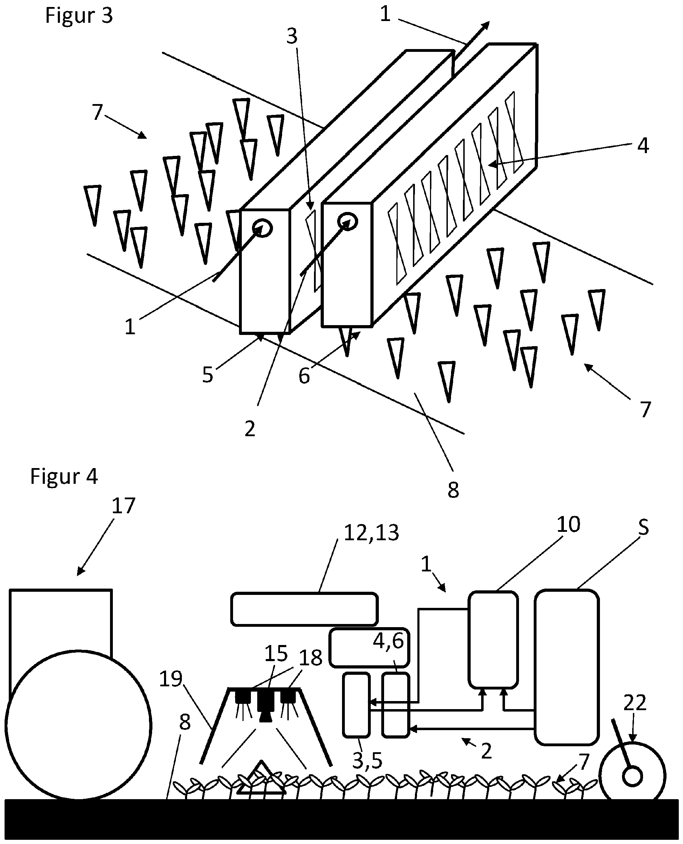

In der Figur 3 ist die Situation gemäß Figur 2 nochmals in einer perspektivischen Darstellung gezeigt. Dabei sind sowohl in dem ersten Leitungssystem 1 für heiße Flüssigkeit als auch im Leitungssystem 2 für kalte Flüssigkeit mehrere Ventile 3 und 4 mit entsprechenden Auslassöffnungen 5 und 6 angeordnet. Die Auslassöffnungen können dabei mittels der hier ebenfalls nicht dargestellten Steuereinrichtung gegebenenfalls auch noch verschwenkt werden, sodass eine sehr exakte im Millimeterbereich liegende Applikation sowohl der heißen als auch der kalten Flüssigkeit auf die durch die Steuereinheit gewählte Pflanze durchgeführt werden kann.

In der Figur 4 ist ein Ausführungsbeispiel einer erfindungsgemäßen Vorrichtung schematisch als Gesamtsystem in Form eines an einen Schlepper 17 ankoppelbaren Anbau- beziehungsweise Anhängegeräts dargestellt. Mittels des Schleppers 17 wird die gesamte Vorrichtung über einen Kulturpflanzenbestand bewegt. Dabei erkennt eine Erkennungseinrichtung 12 die auf der Oberfläche 8 wachsenden Pflanzen 7. Die Erkennung erfolgt vorzugsweise über eine Kamera 15, die als 3D-Kamera ausgebildet sein kann und gegebenenfalls auch über eine Infrarotkamera. Zur besseren Erfassung der auf der Oberfläche befindlichen Pflanzen weist das Ausführungsbeispiel der Figur 4 noch Beleuchtungseinrichtungen 18 auf, mittels welcher die Oberfläche, die von der Kamera 15 erfasst wird, beleuchtet wird, sowie eine Verschattungseinrichtung 19, welche den von der Kamera erfassten Bereich vor einfallendem Sonnenlicht abschirmt. Die Kameradaten werden dann an eine Erkennungseinrichtung 12 übermittelt, welche mittels eines integrierten künstlichen neuronalen Netzes die Pflanzen zwischen gewollten und ungewollten Pflanzen in dem Kulturpflanzenbestand auf der Oberfläche 8 differenziert und die Position ihrer Wurzelpunkte detektiert. Sofern die Erkennungseinrichtung 12 eine ungewollte Pflanze auf der Oberfläche 8 identifiziert, öffnet die Steuereinrichtung 13 das entsprechende Ventil 3, wenn es sich über oder in Nähe der ungewollten Pflanze befindet. Die Positionsdaten werden dabei von der Erkennungseinrichtung 12 an die Steuereinrichtung 13 übermittelt. Gleichzeitig werden Geschwindigkeitsdaten aus der Überlappung aufeinanderfolgender Bilder der Kamera 15 errechnet und für eine noch höhere Genauigkeit mit den Daten eines GPS- oder anderen Sensors zur Bewegungs- Geschwindigkeits- und/oder Positionserfassung abgeglichen. Die Steuereinrichtung 13 ermittelt den Zeitpunkt zum Öffnen (und Schließen) eines oder mehrerer entsprechender Ventile 3 des ersten Leitungssystems 1 aus der Kombination der Positionsdaten der Pflanze mit Bewegungs- bzw. Geschwindigkeitsdaten der Vorrichtung, unter Berücksichtigung der Schaltzeiten der Ventile und der Zeit, die die Flüssigkeit von der Auslassöffnung bis zum Auftreffen auf der Pflanze bzw. der Fläche benötigt. Über entsprechende Steuersignale der Steuereinrichtung 13 erfolgt dabei das Öffnen der Ventile 3 des ersten Leitungssystems. Hat die Erkennungseinrichtung 12 in der näheren Umgebung der ungewollten Pflanze, die nun mit heißem Wasser geschädigt beziehungsweise zerstört wird, gewollte Pflanzen im Kulturpflanzenbestand festgestellt, öffnet die Steuereinrichtung entsprechende Ventile 4 des zweiten Leitungssystems 2, um diese Pflanzen vor verlaufender beziehungsweise verspritzender heißer Flüssigkeit der Heißflüssigkeitsanwendung und somit vor thermischen Beschädigungen zu schützen. Die Ermittlung der Zeitpunkte für das Öffnen und Schließen der Kaltwasserventile erfolgt dabei analog zu denen des Heißwassersystems.

Eine im Boden laufende Schneidscheibe 22 minimiert Schwingungen und Bewegungen quer zur Bewegungsrichtung der Vorrichtung. Für eine besonders gleichförmige, schwingungsarme Bewegung in gleichbleibendem Abstand über der Fläche ist der Teil der Vorrichtung, der die Kamera sowie die Auslassöffnungen beinhaltet, zudem höhenverstellbar und schwingungsgedämpft gelagert (nicht dargestellt). Die Höhenverstellung erfolgt dabei automatisch auf Basis des durch die 3D-Kamera ermittelten Abstands zur Fläche. Deutlich zu erkennen ist in Figur 4, dass sowohl das erste Leitungssystem 1 als auch das zweite Leitungssystem 2 vom gleichen Flüssigkeitsspeicher S gespeist wird. Die Beschickung des zweiten Leitungssystems 2 mit Flüssigkeit auf Umgebungstemperatur erfolgt dabei direkt, während im ersten Leitungssystem 1 zwischen Flüssigkeitsspeicher S und den Ventilen 3 ein Erhitzer 10 in Form eines propangasbetriebenen Gas-Durchlauferhitzers angeordnet ist, welcher die im Flüssigkeitsspeicher S bevorratete Flüssigkeit auf eine Temperatur von ca. 371 K +/- 2 K erhitzt. Deutlich zu erkennen ist in der Darstellung der Figur 4 auch, dass das erste Leitungssystem zur Applikation von heißer Flüssigkeit ein Zirkulationssystem 11 aufweist. Dieses dient dazu, dass bei geschlossenen Ventilen 3 des ersten Leitungssystems 1 die erhitzte Flüssigkeit nicht in den großen Flüssigkeitsspeicher S zurückgeführt werden muss, sondern die im Zirkulationssystem befindliche heiße Flüssigkeit immer nur wieder durch den Durchlauferhitzer minimal erhitzt werden muss, um die zur Applikation notwendige Temperatur aufrecht zu erhalten. Würde die Flüssigkeit in den großen Flüssigkeitsspeicher S zurückgeführt, würde dadurch ein erheblicher Energieverlust entstehen, da die erhitzte Flüssigkeit dann wieder in die Nähe der Umgebungstemperatur abgekühlt würde.

### Bezugszeichenliste

- S: Flüssigkeitsspeicher
- 1: Leitungssystem
- 2: Leitungssystem
- 3: Ventil
- 4: Ventil
- 5: Flüssigkeitsauslass
- 6: Flüssigkeitsauslass
- 7: Pflanze
- 8: Bodenoberfläche
- 9: Umlaufpumpe
- 10: Erhitzer
- 11: Zirkulationssystem
- 12: Erkennungseinrichtung
- 13: Steuereinrichtung
- 14: Förderpumpe
- 15: Kamera
- 16: Pfeil
- 17: Schlepper
- 18: Beleuchtungseinrichtung
- 19: Verschattungseinrichtung
- 20: Wurzelpunkt
- 21: flüssigkeitsführendes Bauteil
- 22: Schneidscheibe

## Patentansprüche

1. Vorrichtung zur Pflanzenregulierung in einem Kulturpflanzenbestand, die über diesen Kulturpflanzenbestand bewegbar ist, mit
a) wenigstens einem Flüssigkeitsspeicher (S) zur Aufnahme von Flüssigkeit,
b) wenigstens einem mit dem wenigstens einen Flüssigkeitsspeicher (S) verbundenen ersten Leitungssystem (1) für Flüssigkeit, welches mit wenigstens einem über ein Ventil (3) ansteuerbaren Flüssigkeitsauslass (5) versehen ist,
c) einer Erkennungseinrichtung (12) zur Erkennung von Pflanzen und Übermittlung der Positionsdaten der Pflanzen an die Steuereinrichtung,
d) einer Steuereinrichtung (13) zur Ansteuerung des wenigstens einen Ventils (3) des Leitungssystems (1) für Flüssigkeit,
wobei
die Erkennungseinrichtung zur Differenzierung von Pflanzen im Kulturpflanzenbestand zwischen gewollten Pflanzen und ungewollten Pflanzen ausgebildet ist und
die Steuereinrichtung zum Öffnen der Ventile des wenigstens einen ersten Leitungssystems ausschließlich zum Besprühen der ungewollten Pflanzen im Kulturpflanzenbestand mit Flüssigkeit ausgebildet ist bzw. zum Aussparen der gewollten Pflanzen,
**dadurch gekennzeichnet, dass**
ungewollte Pflanzen durch die Wirkung der kinetischen und/oder thermischen Energie der Flüssigkeit geschädigt oder abgetötet werden, wobei die Schädigung durch die kinetische Energie vorzugsweise durch Spülen bzw. Mitreißen der Pflanze in den Boden erfolgt und die thermische Schädigung durch Applikation heißer Flüssigkeit und/oder Flüssigkeitsdampf mit einer Temperatur von über 333 K auf die ungewollten Pflanzen erfolgt.

2. Vorrichtung nach Anspruch 1, **dadurch gekennzeichnet, dass** die Erkennungseinrichtung (12) zur Detektion wenigstens eines besonders vulnerablen Punktes oder Bereichs je Pflanze ausgebildet ist, vorzugsweise zur Detektion des Wuchszentrums und/oder des Wurzelpunktes (20) bzw. des Punktes, an denen die Pflanze aus dem Boden austritt.

3. Vorrichtung nach einem der vorhergehenden Ansprüche, **dadurch gekennzeichnet, dass** wenigstens ein mit dem wenigstens einen Flüssigkeitsspeicher (S) verbundenes zweites Leitungssystem (2) für Flüssigkeit vorgesehen ist, welches mit wenigstens einem über ein Ventil (4) ansteuerbaren Flüssigkeitsauslass (6) versehen ist, das über eine Steuereinrichtung (12) angesteuert wird, wobei in dem wenigstens einem ersten Leitungssystem (1) ein Erhitzer (10) zum Erhitzen von aus dem Flüssigkeitsspeicher (S) in das wenigstens eine erste Leitungssystem (1) geförderte Flüssigkeit angeordnet ist, welcher vorzugsweise über einen Temperaturregler geregelt wird.

4. Vorrichtung nach einem der vorhergehenden Ansprüche , **dadurch gekennzeichnet, dass** das wenigstens eine erste Leitungssystem (1) mit dem Erhitzer (10) als Zirkulationssystem (11) ausgebildet ist, wobei in dem Zirkulationssystem (11) vorzugsweise eine Umlaufpumpe (9) angeordnet ist und die Leitungen zwischen Erhitzer (10) und Ventilen (3) vorzugsweise thermisch isoliert sind.

5. Vorrichtung nach einem der vorhergehenden Ansprüche, **dadurch gekennzeichnet, dass** wenigstens ein flüssigkeitsführendes Bauteil (21) zwischen Ventil (3) und Auslassöffnung (5) durch die heiße Flüssigkeit im wenigstens ersten Leitungssystem vorgewärmt wird, vorzugsweise dadurch, dass dieses Bauteil mit einem Teil des ersten Leitungssystems wärmeleitend verbunden ist und besonders vorzugsweise dadurch dass das Bauteil (21) direkt von heißer Flüssigkeit durchströmt oder umspült wird.

6. Vorrichtung nach einem der vorhergehenden Ansprüche, **dadurch gekennzeichnet, dass** die Erkennungseinrichtung (12) zur Erkennung unterschiedlicher Pflanzen wenigstens eine Kamera (15) zur Detektion elektromagnetischer Wellen aufweist.

7. Vorrichtung nach einem der vorhergehenden Ansprüche, **dadurch gekennzeichnet, dass** die Erkennungseinrichtung den Abstand zum Boden und/oder den Pflanzen erfasst, vorzugsweise dadurch, dass wenigstens eine Kamera (15) als 3D-Kamera ausgebildet ist.

8. Vorrichtung nach einem der vorhergehenden Ansprüche, **dadurch gekennzeichnet, dass** die Steuereinrichtung die Bewegung bzw. Geschwindigkeit der Vorrichtung erfasst, vorzugsweise indem sie die Bewegung aus den überlappenden Bildern wenigstens einer Kamera (15) ermittelt und/oder in dem sie einen mit der Steuereinrichtung (13) kommunizierenden Sensor, vorzugsweise einen GPS-Sensor aufweist.

9. Vorrichtung nach einem der vorhergehenden Ansprüche, **dadurch gekennzeichnet, dass** die Erkennungseinrichtung (12) wenigstens ein künstliches neuronales Netz beinhaltet welches vorzugsweise mit Hilfe einer Bilddatenbank trainiert wurde.

10. Vorrichtung nach einem der vorhergehenden Ansprüche, **dadurch gekennzeichnet, dass** Bewegungen bzw. Schwingungen quer zur Hauptbewegungsrichtung minimiert werden durch wenigstens ein Rad mit formschlüssigem Bodenkontakt, vorzugsweise ein teilweise im Boden eintauchendes Schneidrad bzw. eine Schneidscheibe (22).

11. Vorrichtung nach einem der vorhergehenden Ansprüche, **dadurch gekennzeichnet, dass** Bewegungen bzw. Schwingungen quer zur Hauptbewegungsrichtung minimiert werden durch wenigstens ein durch den Boden schneidendes Element, vorzugsweise ein teilweise im Boden eintauchendes vertikal angeordnetes Schar.

12. Vorrichtung nach einem der vorhergehenden Ansprüche, **dadurch gekennzeichnet, dass** die Flüssigkeit als Rundstrahl austritt.

13. Vorrichtung nach einem der vorhergehenden Ansprüche, **dadurch gekennzeichnet, dass** der mindestens eine Flüssigkeitsauslass in einem Abstand von bis zu 50cm über die Fläche bewegt wird, vorzugsweise in einem Abstand von 3cm bis 30cm

14. Verfahren zur Pflanzenregulierung in einem Kulturpflanzenbestand umfassend folgende Verfahrensschritte:
i Erfassen eines Teils der Pflanzen in einem Kulturpflanzenbestand,
wobei
ii ein Differenzieren der erfassten Pflanzen in gewollte Kulturpflanzen und andere ungewollte Pflanzen und nachfolgend
iii ein Besprühen der anderen ungewollten Pflanzen mit Flüssigkeit, vorzugsweise mit hoher thermischer und/oder kinetischer Energie und/oder Flüssigkeitsdampf, und nachfolgend
iv ein Erfassen eines weiteren Teils der Pflanzen in einem Kulturpflanzenbestand und eine Wiederholung der Verfahrensschritte i bis iv stattfindet,
**dadurch gekennzeichnet, dass**
ungewollte Pflanzen durch die Wirkung der thermischen und/oder kinetischen Energie der Flüssigkeit geschädigt oder abgetötet werden, wobei die Schädigung durch die Wirkung der kinetischen Energie vorzugsweise durch Spülen bzw. Mitreißen der Pflanze in den Boden erfolgt und die thermische Schädigung durch heiße Flüssigkeit und/oder Flüssigkeitsdampf mit einer Temperatur von über 333 K erfolgt.

15. Verfahren nach Anspruch 14, **dadurch gekennzeichnet, dass** gleichzeitig oder zeitnah zum Besprühen der anderen ungewollten Pflanzen mit Flüssigkeit hoher thermischer und/oder kinetischer Energie oder Flüssigkeitsdampf, ein Besprühen der gewollten Kulturpflanzen mit kalter Flüssigkeit mit niedriger kinetischer Energie und/oder kaltem Flüssigkeitsnebel erfolgt.
